# EUROPEAN PATENT SPECIFICATION

(11) **EP 1 408 384 B1**
(45) Date of publication and mention of the grant of the patent: **17.05.2006**
(21) Application number: 02425609.1
(22) Date of filing: 09.10.2002
(51) Int. Cl.: G05B 13/02

(54) **An arrangement for controlling operation of a physical system, like for instance fuel cells in electric vehicles**
Anordnung zur Steuerung des Betriebs eines physikalischen Systems wie zum Beispiel einer Brennstoffzelle in elektrischen Fahrzeugen
Agencement pour contrôler l'opération d' un système physique comme par example une pile à combustible pour un véhicule électrique

(43) Date of publication of application: 14.04.2004
(73) Proprietor: STMicroelectronics S.r.l., 20041 Agrate Brianza (Milano) (IT)
(72) Inventor: Moselli, Giovanni, 80028 Grumo Nevano (Napoli) (IT); Maione, Silvia, 70124 Bari (IT); Lavorgna, Mario, 80070 Bacoli (Napoli) (IT); Giuffré, Francesco, 98125 Messina (IT)
(74) Representative: Bosotti, Luciano

(56) References cited:
- DE-A- 19 624 301
- DE-A- 19 731 980
- ARRIAGADA J ET AL: "Artificial neural network simulator for SOFC performance prediction" JOURNAL OF POWER SOURCES, ELSEVIER SEQUOIA S.A. LAUSANNE, CH, vol. 112, no. 1, 24 October 2002 (2002-10-24), pages 54-60, XP004387630 ISSN: 0378-7753
- IWAN L C ET AL: "The application of neural networks to fuel processors for fuel cell vehicles" DECISION AND CONTROL, 1998. PROCEEDINGS OF THE 37TH IEEE CONFERENCE ON TAMPA, FL, USA 16-18 DEC. 1998, PISCATAWAY, NJ, USA,IEEE, US, 16 December 1998 (1998-12-16), pages 1585-1590, XP010326991 ISBN: 0-7803-4394-8

## Description

### Field of the invention

The present invention relates to the control of systems and has been developed with particular attention paid to its possible application for the control of stacks of fuel cells, which are used in the automotive sector. However, the invention is in itself of general application and can be therefore applied to the control of physical systems of any type.

A stack of fuel cells is an energy converter of an electro-chemical type which receives at input hydrogen and oxygen and supplies at output current to a load. Transformation takes place without combustion. From the physical standpoint, the fuel cell consists of an electrolytic material (either liquid or solid) sandwiched between two electrodes having the function of cathode and anode. The input fuel passes across the anode, and the oxygen passes across the cathode. The input fuel is catalytically decomposed into ions, which traverse the electrolyte, and electrons, which flow along an external path closed by the load. Ions and electrons recombine on the cathode forming waste products, consisting basically in water.

### Description of the prior art

For the control of fuel cells (or of physical systems with an equivalent behaviour) there currently exist various of models aimed at determining the output voltage by means of techniques of a quantitative type, which are based upon chemical and physical laws. The corresponding models, which are derived from theoretical considerations, take into account a number of variables (e.g., cell temperature, partial pressure of the input oxygen, current delivered) but are not robust nor are they easy to handle. Consequently, they are not well suited for use in practical cases.

In practice, the models in question can be brought down to one or more equations which identify, for example, the value of the voltage supplied by the fuel-cell stack as a function of the values of current and temperature and of other factors, such as the pressure of the oxygen, the pressure of the air at input to the stack, etc. Usually, such models comprise one or more equations, each of which refers to given ranges of variation of the input parameters.

Above all in automotive sector applications, the use of electric vehicles is spreading, and, in particular, the use of hybrid fuel-cell and battery electric vehicles.

In the above context, management of the energy sources and, in particular, of the fuel-cell stack is of fundamental importance, above all in relation to management of the energy flows between sources and loads. In order to carry out proper management of resources, it is important to evaluate the correct operation of the energy resources which are to be handled by the control system.

In addition, it is necessary to take into account the fact that, in the automotive context, the applications must also be reconciled with requirements of simplicity of implementation so as to avoid excessive costs and overall dimensions, at the same time meeting the somewhat stringent demands of reliability also in rather hostile environments of application.

From the publication of Arriagada J. et al "Artificial neural network for SOFC performance prediction", Journal of Power Sources, Vol. 112, no. 1, 24 October 2002, pages 54-60 it is known a modelling tool for evaluation of a solid oxide fuel cell (SOFC) performance, that include training an artificial neural network with data generated by a cell model."

### Object and summary of the invention

The object of the present invention is to provide a control system capable of meeting in an optimal way the requirements outlined above.

According to the present invention, the said object is achieved thanks to a system having the characteristics referred to specifically in the claims that follow.

In the context of application to which reference has been made previously (which, it is emphasized, is not the only context to which the invention can be applied) the solution according to the invention enables a control structure based upon an adaptive neural model of a fuel-cell stack to be obtained, with the purpose of achieving more efficient diagnostic and control techniques on the said system.

In the currently preferred embodiment, a specific part of the control system updates the neural model, in the case where, on account of the variation of external and internal parameters of the stack, this is no longer able to represent accurately operation of the corresponding device.

The neural model is used for comparing its own output with that of the real system, for the purposes of control and diagnostics. If the deviation persists over time and is substantial, the model can be updated. Verification is made via an analysis of the significant quantities of the stack stored in a database. The control system uses the same data present in the database to train the neural network and update the neural model of the stack.

The system enables prediction of the operation of the stack by means of an artificial neural network which represents a powerful system-identification tool, whilst, at the same time, it is easy and fast to implement thanks to the currently available means for processing signals of a numeric type. The system further provides a self-updating model and achieves first a considerable level of flexibility with respect to possible variations in operation of the system, also in relation to possible evolutions of the system represented, for example, by the use of stacks of different power.

At least in the currently preferred embodiment, the solution according to the invention gives rise to a system based upon the use of powerful modelling techniques represented by neural networks. The latter represent an effective identification tool, which is simple to implement and does not require a knowledge of the physical phenomena that underlie the physical system to be modelled.

The neural model of the fuel-cell stack is self-updating and consequently presents a considerable robustness towards parametric variations of the system.

In addition, no intervention is envisaged on the real system consisting of the fuel-cell stack, which is a device that, for its operation, requires a complex set of auxiliary elements, so that the diagnostics of the system is no simple task.

The solution according to the invention enables management of the energy resources represented by the stack in an optimal way, since at any instant it enables evaluation of proper operation thereof.

### Brief description of the annexed drawings

The invention will be now be described, purely by way of non-limiting example, with reference to the attached drawings, in which:
- Figure 1 illustrates, in the form of a block diagram, the structure of a control system according to the invention;
- Figures 2 to 4 illustrate in greater detail the structure of some of the elements represented in Figure 1;
- Figure 5 is a schematic illustration of execution of the function of training the neural network, with updating of the corresponding weights and bias variables; and

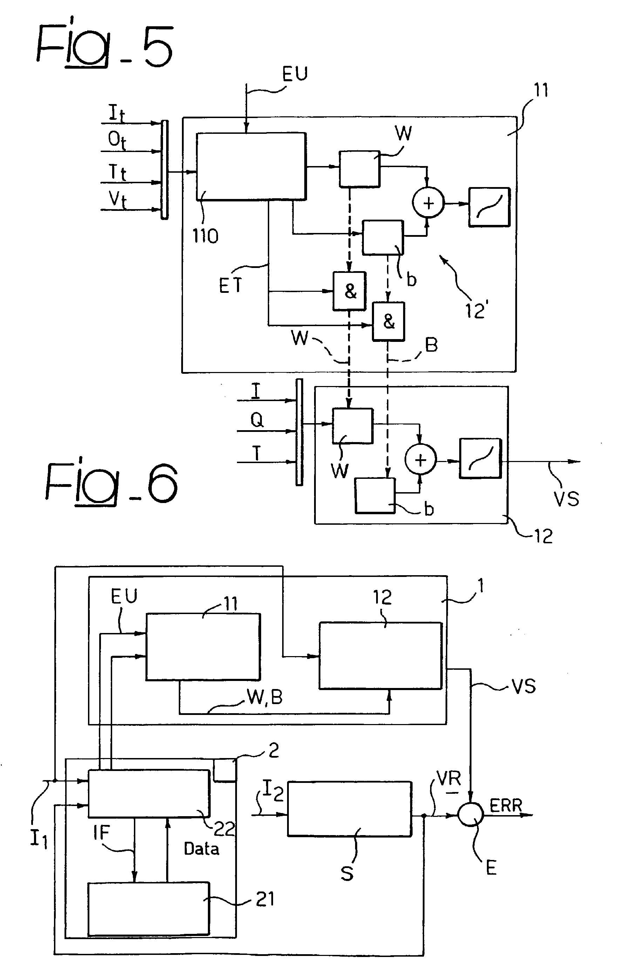

- Figures 5 and 6 are further block diagrams which refer to possible generalizations of the solution according to the invention.

### Detailed description of exemplary embodiments of the invention

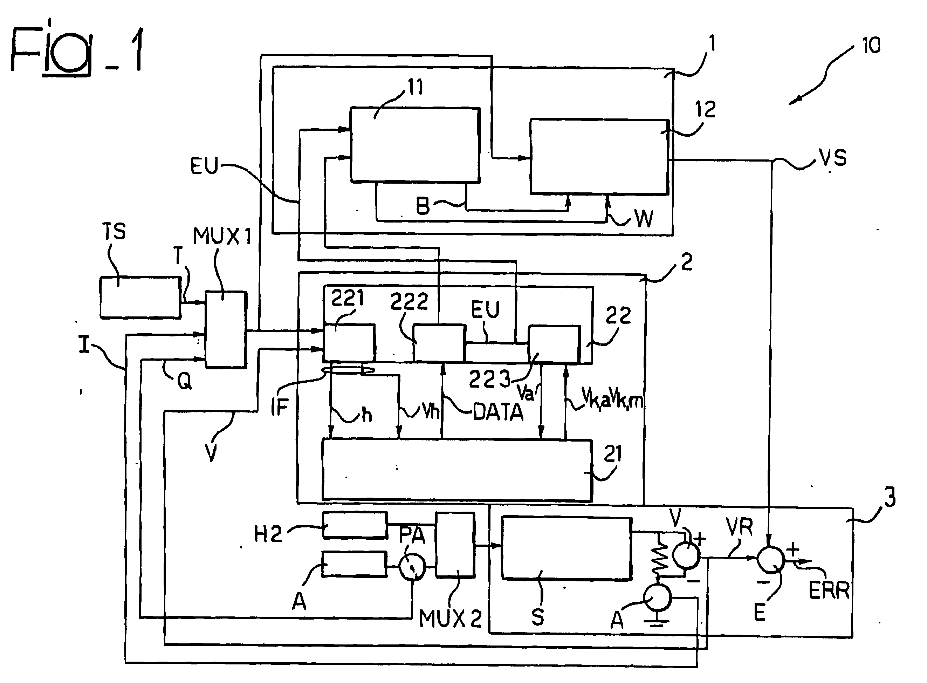

In the diagram of Figure 1, the reference number 10 designates, as a whole, a hardware/software control system based upon a self-updating artificial neural model of the electrical behaviour of a controlled system. The said controlled system, in the example to which Figures 1 to 5 refer, is assumed as being made up of a fuel-cell stack (of a known type) in normal operating conditions.

The system 10, by evaluating the deviation from the operation of the stack from its own model, enables more efficient implementation of techniques of diagnostics and management of the energy resource represented precisely by the stack, this being done taking into account that the controlled system has an operation the may vary over time on account of wear and/or following upon variations of certain parameters either internal or external to the system itself.

Consequently, the solution according to the invention envisages another structure which works alongside the neural model of the stack in order to identify possible variations of operation thereof due to any one of the causes cited above, in order to update the model of the stack accordingly.

In the context of the diagram of Figure 1, three sets of blocks designated by 1, 2 and 3 can be distinguished.

Starting - for reasons of simplicity of treatment - from the set 3, the set itself basically represents the controlled "sub"-system represented, in the example of embodiment here illustrated, by the fuel-cell stack.

The corresponding operation can be described as a whole by resorting to a representation in which the system S has a first input constituted by the supply of hydrogen H₂ and another input constituted by the supply of air A. The said inputs are characterized by known values of pressure and flow rate. In particular, in the diagram, a sensor PA is represented, which detects the air flow, generating a corresponding signal, which is sent to the input of the system 10.

A multiplexer, designated by MUX1, is provided at the input of the system for receiving, in addition to the flow-rate signal Q generated by the sensor PA, also a signal T which identifies the temperature of the stack generated by a sensor TS, as well as a signal I generated by an amperometric sensor A connected to the output of the stack.

The signal I indicates the electrical current delivered by the stack. This quantity constitutes, together with the voltage VR supplied by the stack, detected by a voltmetric sensor V, the set of outputs of the stack S.

The hydrogen supply H₂ and the air supply A can be considered as sent to the input of the stack S via a module which basically amounts to a multiplexer MUX2.

To complete the description of the set of blocks 3, the reference E designates a summation node (with sign), to which there are sent, with opposite signs, a value of estimated voltage VS produced by the set 1, which will be described in greater detail in what follows, and the actual output voltage VR of the stack detected by the sensor V.

In this way, the set 3 generates an error signal ERR which represents the deviation between the voltage VR measured by the sensor V and the voltage VS estimated by the model represented by the set 1. The error signal ERR can be used by other systems not illustrated, but of a known type) associated to the stack S for different purposes, for example for diagnostic purposes.

The set of blocks designated by 2 receives at input, in addition to the signals T (stack temperature), I (stack output current) and Q (air-supply flow rate) coming from the multiplexer MUX1, also the signal indicating the actual voltage of the stack generated by the sensor V.

The set 2 basically comprises a block 21 that functions as a database in which, under the supervision of a block 22, which functions as the control system proper, there are stored sensing data corresponding to some significant quantities of operation of the stack S, such as, precisely, the temperature T of the stack, the generated current I, the air flow rate Q and the actual voltage VR of the stack. The values of said sensing data are stored in the database 21 under the control of a control system 22.

According to criteria which will be illustrated more fully in what follows, the system 22 carries out an analysis of the possible variation of the data contained in the database 21. If said analysis reveals that the neural model of the electrical operation of the stack S is no longer satisfactory on account of internal or external variations of the input parameters, the control system 22 uses the sensing data stored in the database 21 to carry out a (new) step of training and validation of the neural network upon which the set 1 is based.

More specifically, said set comprises a neural network 12 which defines the model proper of the controlled system. Associated to the neural network 12 is a training module designated, as a whole, by 11. The neural network 12 receives at input the signals coming from the multiplexer MUX1 and generates, starting from said signals, the value of estimated voltage VS which is to be sent (with positive sign) to the summation node E to which the value of actual voltage generated by the sensor V is sent with a negative sign. Operation of the neural network 12 is determined by the values of the weights W and of the bias B produced by the module 11, which receives at input signals generated by two modules 222 and 223 that constitute the respective sub-blocks of the block 22.

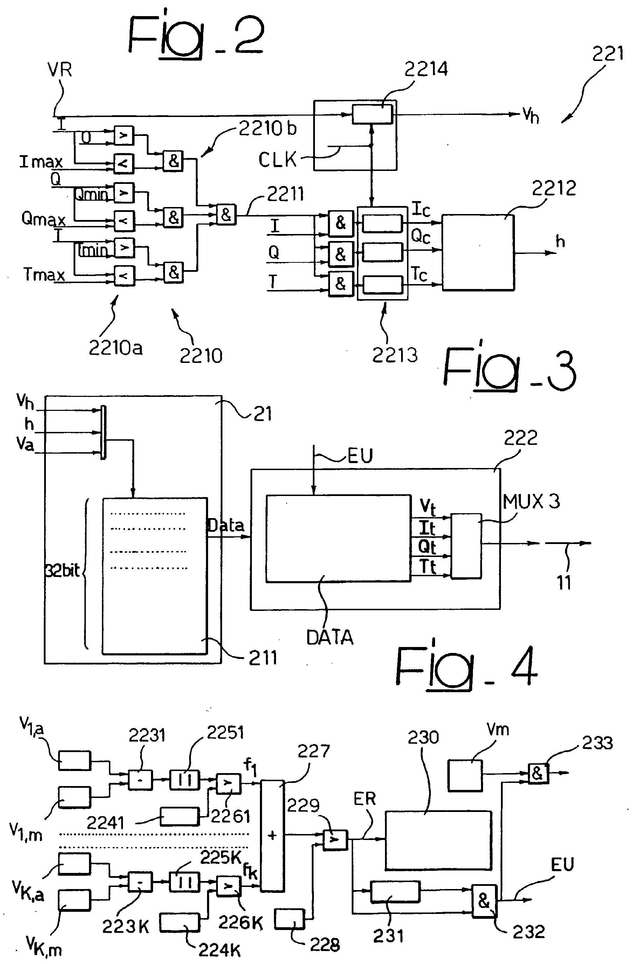

Before examining the structure of the above two sub-blocks, it is expedient to examine, with reference to the diagram of Figure 2, the structure of the sub-block 221.

The above sub-block 221 basically comprises, as input stage, a network 2210 comprising a series of comparators 2210a followed by a network of AND logic gates designated, as a whole, by 2210b.

To the input of the network in question there are sent the sensing signals represented by the current signal I, air-flow signal Q, and temperature signal T of the stack, referred to previously.

The threshold comparators 2210a compare the value of each of said input signals with the maximum and minimum limits respectively of corresponding ranges of values: Iₘₐₓ, Iₘᵢₙ; Qₘₐₓ, Qₘᵢₙ; Tₘₐₓ, Tₘᵢₙ. In the case of the current signal I, said minimum value Iₘᵢₙ is zero.

The AND gates process (according to criteria which are evident from the drawing and are obvious to a person skilled in the sector and hence are such as not to require a detailed description herein) the output signals of the threshold comparators 2210a so as to verify whether the signals I, Q and T fall within the operating ranges envisaged, the aim being to drive an enable line 2211 in order to enable the signals I, Q and T to be stored (in the form of values IC, QC, TC rounded off according to a given quantization step) in a functional module 2212.

The reference number 2213 designates the set of blocks which supervise the rounding-off function under the control of a clock signal CLK, the rate of which identifies, in effect, the rate of updating of the data stored in the database 21.

The signal CLK moreover drives, through a sample-and-hold block 2214 the transfer, sampled in time with a hold function, of the actual voltage VR in the form of a corresponding voltage value Va.

The block 2212 implements a function F(I_{C}, Q_{C}, T_{C}) which calculates, from the discretized values I_{C}, Q_{C}, and T_{C}, a memory address h in which to store the corresponding voltage value Vₕ. In other words, the function F identifies a bi-unique correspondance between the input set (I_{C}, Q_{C}, T_{C}) and the address h.

The sampled actual-voltage signal Vₕ is thus stored in the database 21. On the basis of the value of the address h, the values Vₕ are stored in the corresponding memory location.

In particular, at the memory address marked by h = F(I_{C}, Q_{C}, T_{C}) different values of the voltage Vₕ measured with the same input set (I_{C}, Q_{C}, T_{C}) are stored. The mean value of such samples at one and the same address h is designated by V_{h, m}.

Using, for example, a 32-bit memory, it is possible to store a considerable amount of data, which is sufficient for a good training of the network.

As is illustrated in Figure 3, the sensing data thus stored are to be selectively read by the database 21 in order for them to be supplied as updating data, via the block 222, to the training block 11. This occurs upon reception of an enabling signal EU generated by the block 223, which will be described in greater detail in what follows.

Upon reception of the signal EU generated by the block 223, the block 222 fetches the aforesaid data DATA from the database 21 and sends them onto respective outputs Vₜ, It, Qₜ, and Tₜ (as values of voltage, current, air flow, and temperature, respectively), supplying them to a further multiplexer MUX3, which transfers them to the module 11.

The diagram of Figure 4 illustrates the criteria which regulate generation of the signal EU by the module 223.

In particular, at input to the module 223, the voltage value of the current model, at the k-th input (designated by V_{k, a}) is compared with the mean value V_{k, m}.

Specifically, V_{k, m} is nothing other than the mean value of the aforesaid samples at the generic address k. V_{k, a} is, instead, the voltage value supplied by the current model stored at the memory address k. Of course, k is linked to the input set (I_{C'}, Q_{C'}, T_{C'}) by the relation k=F(I_{C'}, Q_{C'}, T_{C'}).

If the difference, calculated for each input by a respective subtraction module designated generically by 223k (k = 1, ..., n), is larger than a given pre-set tolerance, which is established in a module 224k and is applied by means of a window circuit 225k and according to a comparison threshold 226k, a corresponding flag fₖ (with k again equal to 1, ..., n) is set equal to 1. If the sum of the flags, calculated in a block 227, is greater than a threshold value Z (fixed by a block 228 as the maximum number of voltage samples allowed outside the tolerance), according to the comparison performed in a block 229, pre-determined restoring and operation procedures (e.g., hydrogen purging, water purging, addition of water, etc.) are enabled.

The above operations are identified, as a whole, by the block designated as 230.

At the same time, a timer 231 is started up.

At the end of the count of the timer, if the signal ER continues to indicate the fact that the sum of the flags is greater than the tolerance value Z (a circumstance that is detected by an AND logic gate 232), the signal EU is generated and the values V_{k, a} are updated with the new values V_{k, m}.

The above operation is carried out by means of an AND logic gate, designated by 233.

The diagram of Figure 5 represents the criteria with which the quantities Iₜ, Qₜ, Tₜ, Vₜ fetched from the database 21 by the module 222 are exploited, upon reception of the signal EU by the training module 11 of the set 1.

The function of the training in question is to generate the signals regarding the weights W and bias B which are to be exploited (in a known way, on the basis of criteria which are such as not to require a specific description herein) by the functions for activation of the neurons N of the neural network 12 for generating at output the estimated-voltage signal VS as a function of the signals for current I, flow rate Q, and temperature T received via the multiplexer MUX1.

The training function 11 basically consists of a training tool 110, which receives at input, upon reception of the signal EU, the set of training data Iₜ, Qₜ, Tₜ used by the tool 110 to train (according to criteria in themselves known) the neural network 12 reporoduced at the level of a virtual model 12' in the context of the training tool itself.

At the end of training, the tool 110 generates a signal ET, indicating the end of the training step, which enables updating of the weights and bias variables, transferring the virtual model 12' into the real neural model of the stack designated by 12.

The tests conducted by the applicant show that the structure described, with the adaptive neural model, presents evident benefits chiefly linked to the fact that the neural model predicts, more accurately than does the analytical model, the output voltage of the stack S.

The diagram of Figure 6 aims at illustrating the fact that the invention thus far described can be extended to the control of any physical system S whatsoever which can be modelled by means of a neural network 12 with a training module 11 associated thereto which sees to updating the configuration data WB of the neural network 12.

This is achieved according to an update-enable signal EU generated by a control system 22 which supervises operation of a database 21, in which the operation parameters of the controlled system S are stored in the corresponding memory as filtered (rounded-off) data IF so as to be fetched as updating data when the control system 22 detects the need for carrying out updating.

Apart from the above features, the symbols appearing in Figure 6 have the same meaning or a meaning that is functionally equivalent to the symbols appearing in Figure 1.

In particular, the reference E designates the node to which there are sent (with corresponding sign) the signal VS estimated by the neural model 12 (estimated signal, which does not necessarily represent a voltage) and the actual signal VR (also in this case it may be any quantity whatsoever other than a voltage) measured on a controlled system S.

In the diagram of Figure 6, the references I1 and I2 designate in general the inputs of the control system 22 of the neural network 12, on the one hand, and of the controlled system, on the other.

As compared to the specific case previously illustrated with reference to Figures 1 to 5, in the more general diagram of Figure 6 the nature and the number of inputs I1 and I2 can be any whatsoever, as likewise the output VR of the real system S and the output VS estimated by the model 12. The functions of the context proposed remain in any case unaltered.

With reference to the acquisition, filtering and discretization (sensing) functions of the quantities represented in Figure 2, in the case of the generalized model of Figure 6, instead of the quantities I, T, Q and VR, which represent the most significant inputs and the output of the system S, the most significant inputs of the controlled system are taken into account. The functions of rounding-off and storage-address calculation (blocks 2113 and 2112) maintain their task of discretization of the most significant inputs and calculation of the addresses where the samples are stored in the database 21.

Also the operation of data storing and data fetching for them to be used by the training tool 11 remain unaltered as compared to the diagram represented in Figure 3. Of course, as compared with the specific case represented precisely in Figure 3, it is necessary to take into account the nature and the number of inputs and outputs of the blocks represented, in an altogether generic manner, in Figure 6.

Also for the evaluation of the parametric variations and the generation of the updating signal EU of the neural network, the procedure is the one illustrated with reference to Figure 6.

It will be appreciated that carrying-out of the operations of restoring the block 230 of Figure 4 (e.g., hydrogen purge, water purge, addition of water, etc.) are not imperative either in the specific case represented in Figure 4, or in the more general case represented in Figure 6.

The said operations are hence maintained only if the system in question envisages execution of restoring operations, which, however, in many cases are not envisaged.

Then above corresponds, in effect, to the elimination, with respect to the diagram of Figure 4, both of the block 230 and of the timer 231 that detects the interval after which the possible maintenance of the conditions out of threshold is to be detected.

As regards execution of the training operations (updating of the weights and of the bias variables), the general operating principles remain the same, there existing, however, the evident need to change the input/output mapping (Iₜ, Tₜ, Qₜ, Vₜ).

## Claims

1. An apparatus arrangement for controlling a system (S) according to the deviation (ERR) between the value measured on the system (VR) and the value (VS) estimated by means of a model of the controlled system (S) of at least one control parameter, the apparatus comprising:
- a neural network (12), which generates the estimation (VS) of said control parameter implementing said model as a function of a set of characteristic parameters (I, Q, T) of the controlled system (S) and of respective configuration parameters (W, B) of the neural network (12); said neural network (12) having associated thereto a training module (11), which can train said neural network (12) by modifying said configuration parameters (W, B) according to a set of updating data (Iₜ, Tₜ, Qₜ, Vₜ); **characterised by**:
- an acquisition module (21) for acquiring the actual value, as measured on the controlled system (S), of a set of sensing parameters comprising at least one from among said control parameter (VR) and said characteristic parameters (I, Q, T) of the controlled system; and
- a variation module (22), which is sensitive to the variation of said control parameter (V_{k, a}; V_{k, m}) and is able to generate an update-enable signal (EU) when said control parameter falls outside a pre-set tolerance range (228);
said acquisition module (21) being sensitive to said update-enable signal (EU) for transferring to said training module (11), as said updating-data set, said set of sensing parameters (Vₜ, Qₜ, Iₜ, Tₜ).

2. The apparatus according to Claim 1, **characterized in that** said acquisition module comprises a truncation module (2213) for truncating the actual value of at least some of said characteristic parameters (I_{C}, Q_{C}, T_{C}) of the controlled system.

3. The apparatus according to Claim 1 or Claim 2, **characterized in that** said acquisition module (21) comprises a memory (211) for storage (Vₕ) of at least one (VR) of the parameters of said set of sensing parameters.

4. The apparatus according to Claim 3, **characterized in that** said acquisition module (21) comprises a functional module (2212) for generating, according to the value of at least one of said characteristic parameters of the controlled system (I, Q, T) an address (h) for storing said at least one control parameter (Vₕ).

5. The apparatus arrangement according to any one of the preceding claims, **characterized in that** said acquisition module comprises an input network (2110) for verifying whether said actual value, as measured on said controlled system (S), of at least one of said characteristic parameters of the controlled system (S) falls within an allowed range of variation.

6. The apparatus according to any one of the preceding claims, **characterized in that** said acquisition module comprises a sample-and-hold module (2214) for acquiring the value of said control parameter (Vₕ).

7. The apparatus arrangement according to any one of the preceding claims, **characterized in that** said variation module (223) comprises a restore module (230) for restoring at least one parameter of the controlled system (S) when said control parameter falls outside said pre-set tolerance range (229)

8. The apparatus according to Claim 7, **characterized in that** said variation module (223) contains a timer (231) with a count which can be activated when said control parameter falls outside said pre-set tolerance range and **in that** said variation module is configured (232) for emitting said update-enable signal (EU) when, once the count of said timer (231) is through, said control parameter remains outside said pre-set tolerance range.

9. The apparatus according to any one of the preceding claims, **characterized in that** said variation module (223) is configured to detect the deviation, with respect to said tolerance range, of the difference between the current value of said control parameter (V_{k, a}) and the respective mean value (V_{k, m})

10. The apparatus according to any one of the preceding claims, **characterized in that** said variation module (223) is configured for operating according to a plurality of values of said control parameter, by detecting when a given number (Z) of said values of said control parameter falls outside said pre-set tolerance range.

11. The apparatus according to any one of the preceding claims, **characterized in that** said controlled system (S) comprises at least one fuel cell.

12. The apparatus arrangement according to Claim 11, **characterized in that** said at least one control parameter is represented by the voltage (VR, VS) generated by said at least one fuel cell.

13. The apparatus according to Claim 11 or Claim 12, **characterized in that** said characteristic parameters of the controlled system (S) are chosen from the group consisting of:
- the current (I) generated by said at least one fuel cell;
- the quantity of air (Q) supplied to said at least one fuel cell; and
- the temperature (T) of said at least one fuel cell.

## Patentansprüche

1. Vorrichtung zur Regelung eines Systems (S) gemäß der Abweichung (ERR) zwischen dem auf dem System gemessenen Wert (VR) und dem Wert (VS), welcher mittels eines Modells des geregelten Systems (S) geschätzt wird, mindestens eines Regelparameters, wobei die Vorrichtung folgendes aufweist:
- ein neuronales Netz (12), welches die Schätzung (VS) des Regelparameters erzeugt, wobei es das Modell umsetzt als Funktion eines Satzes charakteristischer Parameter (I, Q, T) des geregelten Systems (S) und entsprechender Konfigurationsparameter (W, B) des neuronalen Netzes (12); wobei dem neuronalen Netz (12) ein Trainingsmodul (11) zugeordnet ist, welches das neuronale Netz (12) durch Ändern der Konfigurationsparameter (W, B) gemäß einem Satz Aktualisierungsdaten (Iₜ, Tₜ, Qₜ, Vₜ) trainieren kann;
**gekennzeichnet durch**:
- ein Erfassungsmodul (21) zum Erfassen des tatsächlichen Werts, wie auf dem geregelten System (S) gemessen, eines Satzes von Abtastparametern, welche mindestens einen der Parameter Regelparameter (VR) und charakteristische Parameter (I, Q, T) des geregelten Systems enthalten; und
- ein Variiermodul (22), welches auf die Veränderung der Regelparameter (V_{k, a}; V_{k, m}) reagiert und ein Aktualisierungsfreigabe-Signal (EU) erzeugen kann, wenn der Regelparameter aus einem voreingestellten Toleranzbereich (228) fällt;
wobei das Erfassungsmodul (21) auf das Aktualisierungsfreigabe-Signal (EU) reagiert um, als Satz Aktualisierungsdaten, den Satz Abtastparameter (Vₜ, Qₜ, Iₜ, Tₜ) an das Trainingsmodul (11) zu übertragen.

2. Vorrichtung gemäß Anspruch 1, **dadurch gekennzeichnet, daß** das Erfassungsmodul ein Rundungsmodul (2213) zum Runden des tatsächlichen Werts zumindest einiger der charakteristischen Parameter (I_{c}, Q_{c}, T_{c}) des geregelten Systems aufweist.

3. Vorrichtung gemäß Anspruch 1 oder Anspruch 2, **dadurch gekennzeichnet, daß** das Erfassungsmodul (21) einen Speicher (211) zum Speichern (Vₕ) mindestens eines (VR) der Parameter des Satzes der Abtastparameter aufweist.

4. Vorrichtung gemäß Anspruch 3, **dadurch gekennzeichnet, daß** das Erfassungsmodul (21) ein Funktionsmodul (2212) zum Erzeugen, gemäß dem Wert mindestens eines der charakteristischen Parameter des geregelten Systems (I, Q, T), einer Adresse (h) zum Speichern des mindestens einen Regelparameters (Vₕ) aufweist.

5. Vorrichtung gemäß einem der vorangehenden Ansprüche, **dadurch gekennzeichnet, daß** das Erfassungsmodul ein Eingabe-Netz (2110) zum Verifizieren, ob der tatsächliche Wert, wie gemessen auf dem geregelten System (S), mindestens eines der charakteristischen Parameter des geregelten Systems (S) in einen zulässigen Variationsbereich fällt, aufweist

6. Vorrichtung gemäß einem der vorangehenden Ansprüche, **dadurch gekennzeichnet, daß** das Erfassungsmodul ein Prüf-und-Halte-Modul (2214) zum Erfassen des Werts des Steuerparameters (Vₕ) aufweist.

7. Vorrichtung gemäß einem der vorangehenden Ansprüche, **dadurch gekennzeichnet, daß** das Variiermodul (223) ein Wiederherstellungsmodul (230) zum Wiederherstellen mindestens eines Parameters des geregelten Systems (S), wenn der Steuerparameter aus einem voreingestellten Toleranzbereich (229) fällt, aufweist.

8. Vorrichtung gemäß Anspruch 7, **dadurch gekennzeichnet, daß** das Variiermodul (223) einen Zeitgeber (231) mit einer Zählung enthält, die aktiviert werden kann, wenn der Steuerparameter aus dem voreingestellten Toleranzbereich fällt, und daß das Variiermodul konfiguriert ist (232) zum Aussenden des Aktualisierungsfreigabe-Signals (EU), wenn der Regelparameter außerhalb des voreingestellten Toleranzbereichs bleibt, nachdem die Zählung des Zeitgebers (231) abgelaufen ist.

9. Vorrichtung gemäß einem der vorangehenden Ansprüche, **dadurch gekennzeichnet, daß** das Variiermodul (223) zum Erkennen der Abweichung, in Hinblick auf den Toleranzbereich, der Differenz zwischen dem momentanen Wert des Regelparameters (V_{k,a}) und dem entsprechenden Mittelwert (V_{k, m}) konfiguriert ist.

10. Vorrichtung gemäß einem der vorangehenden Ansprüche, **dadurch gekennzeichnet, daß** das Variiermodul (223) für den Betrieb entsprechend mehreren Werten des Regelparameters konfiguriert ist, indem es erkennt, wann eine gegebene Zahl (Z) der Werte des Regelparameters aus dem voreingestellten Toleranzbereich fällt.

11. Vorrichtung gemäß einem der vorangehenden Ansprüche, **dadurch gekennzeichnet, daß** das geregelte System (S) mindestens eine Brennstoffzelle aufweist.

12. Vorrichtung gemäß Anspruch 11, **dadurch gekennzeichnet, daß** der mindestens eine Regelparameter von der Spannung (VR, VS) dargestellt wird, welche von der mindestens einen Brennstoffzelle erzeugt wird.

13. Vorrichtung gemäß Anspruch 11 oder Anspruch 12, **dadurch gekennzeichnet, daß** die charakteristischen Parameter des geregelten Systems (S) ausgewählt werden aus der Gruppe
- von der mindestens einen Brennstoffzelle erzeugter Strom (I),
- der mindestens einen Brennstoffzelle zugeführte Luftmenge (Q), und
- Temperatur (T) der mindestens einen Brennstoffzelle.

## Revendications

1. Dispositif de commande d'un système (S) selon l'écart (ERR) entre la valeur mesurée sur le système (VR) et la valeur (VS) estimée au moyen d'un modèle du système commandé (S) d'au moins un paramètre de commande, dispositif comprenant :
- un réseau neuronal (12) générant une estimation (VS) dudit paramètre de commande mettant en oeuvre ledit modèle comme fonction d'un ensemble de paramètres caractéristiques (I, Q, T) du système commandé (S) et des paramètres respectifs de configuration (W, B) du réseau neuronal (12), ledit réseau neuronal (12) possédant, en association, un module d'apprentissage (11) pouvant instruire ledit réseau neuronal (12) en modifiant lesdits paramètres de configuration (W, B) selon un ensemble de données de mise à jour (Iₜ, Tₜ, Qₜ, Vₜ) ;
**caractérisé par** :
- un module d'acquisition (21) pour acquérir la valeur réelle mesurée sur le système commandé (S) d'un ensemble de paramètres de détection comprenant au moins un paramètre parmi ledit paramètre de commande (VR) et lesdits paramètres caractéristiques (I, Q, T) du système commandé ; et
- un module de variation (22) sensible à la variation dudit paramètre de commande (V_{k, a} ; V_{k, m}) et pouvant générer un signal de mise à jour/validation (EU) lorsque ledit paramètre de commande sort d'un intervalle préétabli de tolérance (228) ;
ledit module d'acquisition (21) étant sensible audit signal de mise à jour/validation (EU) pour transférer vers ledit module d'apprentissage (11), comme ledit ensemble de données de mise à jour, ledit ensemble de paramètres de détection (Vₜ, Qₜ, Iₜ, Tₜ).

2. Dispositif selon la revendication 1, **caractérisé en ce que** ledit module d'acquisition comprend un module de troncature (2213) pour tronquer la valeur réelle d'au moins certains desdits paramètres caractéristiques (I_{c}, Q_{c}, T_{c}) du système commandé.

3. Dispositif selon la revendication 1 ou 2, **caractérisé en ce que** ledit module d'acquisition (21) comprend une mémoire (211) pour le stockage (Vₕ) d'au moins un (VR) des paramètres dudit ensemble de paramètres de détection.

4. Dispositif selon la revendication 3, **caractérisé en ce que** ledit module d'acquisition (21) comprend un module fonctionnel (2212) pour générer, selon la valeur d'au moins un desdits paramètres caractéristiques du système commandé (I, Q, T), une adresse (h) de stockage dudit au moins un paramètre de commande (Vₕ).

5. Dispositif selon l'une quelconque des revendications précédentes, **caractérisé en ce que** ledit module d'acquisition comprend un circuit d'entrée (2110) pour vérifier si ladite valeur réelle telle que mesurée sur ledit système commandé (S) d'au moins un desdits paramètres caractéristiques du système commandé (S) entre dans un intervalle autorisé de variation.

6. Dispositif selon l'une quelconque des revendications précédentes, **caractérisé en ce que** ledit module d'acquisition comprend un module d'échantillonnage et de maintien (2214) pour acquérir la valeur dudit paramètre de commande (Vₕ).

7. Dispositif selon l'une quelconque des revendications précédentes, **caractérisé en ce que** ledit module de variation (223) comprend un module de restauration (230) pour restaurer au moins un paramètre du système commandé (S) lorsque ledit paramètre de commande sort dudit intervalle préétabli de tolérance (229).

8. Dispositif selon la revendication 7, **caractérisé en ce que** ledit module de variation (223) contient un compteur de temps (231) avec un comptage pouvant être activé lorsque ledit paramètre de commande sort dudit intervalle préétabli de tolérance et **en ce que** ledit module de variation est configuré (232) pour émettre ledit signal de mise à jour/validation (EU) lorsque, une fois que le comptage dudit compteur de temps (231) est écoulé, ledit paramètre de commande reste à l'extérieur dudit intervalle préétabli de tolérance.

9. Dispositif selon l'une quelconque des revendications précédentes, **caractérisé en ce que** ledit module de variation (223) est configuré pour détecter l'écart, par rapport audit intervalle de tolérance, de la différence entre la valeur en cours dudit paramètre de commande (V_{k, a}) et la valeur moyenne respective (V_{k, m}).

10. Dispositif selon l'une quelconque des revendications précédentes, **caractérisé en ce que** ledit module de variation (223) est configuré pour fonctionner selon une pluralité de valeurs dudit paramètre de commande en détectant l'instant où un nombre donné (Z) desdites valeurs dudit paramètre de commande sort dudit intervalle préétabli de tolérance.

11. Dispositif selon l'une quelconque des revendications précédentes, **caractérisé en ce que** ledit système commandé (S) comprend au moins une pile à combustible.

12. Dispositif selon la revendication 11, **caractérisé en ce que** ledit au moins un paramètre de commande est représenté par la tension (VR, VS) générée par ladite au moins une pile à combustible.

13. Dispositif selon la revendication 11 ou 12, **caractérisé en ce que** lesdits paramètres caractéristiques du système commandé (S) sont choisis dans le groupe comprenant :
- le courant (I) généré par ladite au moins une pile à combustible ;
- la quantité d'air (Q) fournie à ladite au moins une pile à combustible ; et
- la température (T) de ladite au moins une pile à combustible.
